# EUROPEAN PATENT APPLICATION

(11) **EP 1 311 088 A1**
(43) Date of publication of application: **14.05.2003**
(21) Application number: 02360023.2
(22) Date of filing: 11.01.2002
(51) Int. Cl.: H04L 12/28, H04L 12/56

(54) **Method for communicating messages within a wireless network and acces point implementing said method**

(71) Applicant: ALCATEL, 75008 Paris (FR)
(72) Inventor: Kaminski, Stephen, 75365 Calv (DE); Bakker, Hajo, 71735 Eberdingen (DE)
(74) Representative: Duhme, Torsten

(57) **Abstract**

The present invention relates to a method for communicating messages (22) within a wireless network having a plurality of wireless terminals, in particular a HIPERLAN network. Said method comprises the steps of:
- providing at least one wireless communication channel that is accessible from said wireless terminals,
- providing portions, in particular a series of frames (30), that subdivide said communication channel into subchannels (32 - 46),
- assigning a first number of said subchannels (32 - 42) to selected ones of said wireless terminals for permitting collision-free access to said communication channel,
- reserving a second number of said subchannels (46) as non-assigned random access channels, and
- communicating said messages (22) between said wireless terminals across said first and second number of subchannels (32 - 46).

The inventive method is characterized by the steps of monitoring if message collisions occur in said random access channels (46), and adjusting said second number depending on whether or not message collisions occur.

## Description

The present invention relates to a method for communicating messages within a wireless network having a plurality of wireless terminals, in particular a HIPERLAN network, said method comprising the steps of:
- providing at least one wireless communication channel that is accessible from said wireless terminals,
- providing portions, in particular a series of frames, that subdivide said communication channel into subchannels,
- assigning a first number of said subchannels to selected ones of said wireless terminals for permitting collision-free access to said communication channel,
- reserving a second number of said subchannels as non-assigned random access channels, and
- communicating said messages between said wireless terminals across said first and second number of subchannels.

The invention further relates to access points for use in a wireless communication network, comprising a protocol unit having protocol steps implemented that allow the inventive method to be executed when said terminal is connected to said wireless communication network.

Such a method and corresponding wireless terminals are known, for instance, from the so-called HIPERLAN standard which is presently emerging in Europe. The invention is preferably directed to a HIPERLAN network, but it is not limited thereto. The invention can also advantageously be used in other networks employing non-assigned random access channels in addition to uniquely assigned subchannels. In particular, the invention can be used in Time Division Multiple Access (TDMA) networks, in Frequency Division Multiple Access (FDMA) networks, and in Code Division Multiple Access (CDMA) networks as well. Such networks provide portions of time (time slots), portions of frequency bandwith, or portions of code bandwidth as subchannels which can be randomly accessed. In the latter two cases, a special beacon frequency or a pilot code can be provided.

In a wireless network, messages are transmitted and received across wireless communication channels. Several communication channels are usually distinguished from one another by the signal frequencies used. In a certain frequency band, however, only one message can be transmitted at a time without additional measures that distinguish different messages. Transmitting more than one message at the same time across the same communication channel would result in message collision, and the transmitted signals would corrupt each other.

In order to organize communication across a certain communication channel, the communication channel is subdivided into subchannels. This can be achieved, for instance, by a series of frames that subdivide said communication channel into time slots. Such frames are sometimes called MAC frames, which is an abbreviation of Medium Access Control. The subchannels correspond to predetermined time slots during which a wireless terminal may send a message. Alternatively, portions of frequency bandwidth or code bandwidth can be used for providing subchannels.

In order to further organize the communication, a first plurality of said subchannels is assigned to selected ones of said wireless terminals. During the corresponding time slots, no other wireless terminal is allowed to send messages across the communication channel.

However, uniquely assigned subchannels prevent wireless terminals from spontaneous communication which might be desired under certain circumstances. In order to solve this conflict, the HIPERLAN standard allows to reserve a certain number of time slots as non-assigned subchannels that are freely accessible from any wireless terminal. The non-assigned subchannels are usually called random access channels (RCH). The HIPERLAN standard does not provide detailed rules or provisions as to the number of random access channels within one frame. Only the minimum number of one random access channel per frame is prescribed.

A higher number of random access channels provides more opportunities for spontaneous communication, i.e. communication without a previous allocation of a certain subchannel. Therefore, it might be desired to choose a high number of random access channels. On the other hand, communication is less organized in random access channels, which can result in unsuccessful communication attempts due to message collisions.

From US 6,198,728 B1 a protocol for a wireless communication network is known that distinguishes between nominal bandwidth assigned to each wireless terminal for communication, and excess bandwidth which is distributed by demand. In this protocol, however, each subchannel is uniquely assigned to one wireless terminal at a time. Therefore, this document does not provide solutions on how to efficiently use random access channels.

It is therefore an object of the present invention to provide a method for communicating messages within a wireless network that makes an efficient use of random access channels.

This object is achieved by a method as mentioned at the outset that includes the additional steps of
- monitoring if message collisions occur in said random access channels, and
- adjusting said second number depending on whether or not message collisions occur.

Thus, the number of random access channels used is varied during operation of the wireless network according to the invention. This allows to adapt the number of random access channels to varying communication demands. For example, in an environment with only one or a few terminals having a high communication demand and a considerable number of terminals having low communication demands, the number of random access channels can be set differently to an environment with all terminals having nearly the same communication demand.

According to another aspect of the invention, the number of random access channels is adjusted depending on whether or not message collisions occur. Thus, the occurrence of message collisions in the random access channels is the basic parameter to optimize the number of random access channels. Another parameter, for instance, could be the number of terminals connected to the wireless network. In contrast to this latter option, however, the proposed parameter of the present invention provides for an increased efficiency, since the occurrence of message collisions more precisely reflects the actual communication demands. Nevertheless, the number of terminals connected to the network can additionally be used in a more sophisticated algorithm in order to optimize the number of random access channels.

Provision of a variable number of random access channels allows for an optimum and situation-dependent compromise between fully organized and spontaneous communication. If it turns out in a certain environment that spontaneous communication provides better efficiency, the number of random access channels is automatically increased thereby achieving more successful communications results. On the other hand, if the demand for spontaneous communication is considerably low, less or even no time slots need to be reserved for random access channels, thereby allowing an increase of uniquely allocated transmit time. All in all, the efficiency of the wireless network is increased. Thus, the above object is completely achieved.

According to a preferred embodiment of the invention, said step of adjusting includes a first substep of estimating a third number representing a number of successful access attempts to said random access channels, and a second substep of setting said second number depending on whether or not said third number increased after a previous setting step.

In this embodiment, the system behavior or system reaction is monitored after each setting step in order to check whether or not the number of successful communications across the random access channels improved. Thereby, ineffective setting steps will be immediately detected, and can be reversed in the next setting step. In other words, the adjustment of the number of random access channels takes place in a closed-loop control. In practical tests, it has further turned out that the number of successful access attempts is a well-suited parameter for optimizing the communication.

In a further embodiment, said second number is decreased, if said third number does not follow an increase of said second number in the previous setting step.

This feature follows the idea to keep the number of random access channels as low as possible, but as high as necessary. If it turns out in the control loop of the previous embodiment that a previous increase of the number of random access channels does not lead to an increase of successful communication, the previous increase of the number of random access channels is reversed. Thereby, organized communication across uniquely assigned subchannels is given a stronger focus without eliminating the possibility to improve communication by means of random access channels. A particular reason, why an increase in the number of random access channels might not lead to an increase in successful communication across said channels could be that the specific channel is jammed or interfered from radio sources not belonging to the wireless network.

According to a further embodiment of the invention, said third number is estimated on a frame-by-frame basis.

According to this feature the number of successful access attempts to the random access channels is estimated in and for each single frame. The feature provides the advantage that the adjustment of the number of random access channels can follow changes in the communication environment very quickly.

In an alternative embodiment, said third number is estimated as an average third number over a group of frames.

This alternative eliminates the risk of rash and unnecessary adjustments in situations where only short time deterioration in the communication environment occurs. Data processing workload is decreased, thereby saving terminal resources for other tasks.

In a further embodiment, said second number is increased, if message collisions are detected.

This embodiment follows the general approach to increase the number of random access channels, if message collisions are detected therein. It is a very effective but simple step to increase the number of successful communication in the absence of external jammers or interfering radio sources.

According to another embodiment of the invention, said second number is decreased, if no message collisions are detected.

This feature again follows the approach to keep the number of random access channels as low as reasonable in order to provide as many subchannels as possible for organized communication. This feature further improves efficiency.

According to another aspect of the invention, said second number is maintained over a pre-defined number of consecutive frames after each setting step.

This measure also contributes to prevent unnecessary and rash adjustments, and also decreases data processing workload.

According to another embodiment, said step of adjusting is iteratively repeated.

This feature leads to a steady and continued adjustment of the number of random access channels. Thereby, the number of random access channels is steadily kept optimum.

According to another embodiment of the invention, a message collision is determined if a corrupted signal is received across a random access channel.

This measure eliminates the need for a detailed analysis of frequency characteristics in a corrupted random access channel. Whenever a message cannot successfully be received across a random access channel, a message collision is assumed regardless of the true reason for the disturbance. If there was actually no message collision between different wireless terminals, but rather a corruption due to external sources, an increase in the number of random access channels can be corrected according to the previous embodiments. On the other hand, this feature provides a simple and effective criterion for a decision on whether or not to increase the number of random access channels.

According to another embodiment of the invention, said second number is selected from a range between a predefined minimum number and a predefined maximum number.

This feature guarantees that the optimization process does not affect the basic network design, since the number of random access channels cannot exceed fixed limits even under worst case conditions. This feature is particularly useful in a closed-loop optimization process.

According to another embodiment of the invention, at least one of said wireless terminals is an access point, and said second number is adjusted by said access point.

This feature is particularly directed but not limited to communication networks based on the HIPERLAN standard, where some terminals being master stations are used as access points to control and organize communication. Other terminal being slave stations are only allowed to communicate under the rules controlled by said access points. In this embodiment, the requirements of the HIPERLAN standard are completely met. Therefore, the invention can easily be implemented in existing systems. However, it should be appreciated by those skilled in the art that the invention is generally applicable to decentralized systems, such as HIPERLAN or BLUETOOTH, as well as to centralized systems having fixed base stations as access points, such as GSM or UMTS.

It goes without saying that the features described above, and those which can be taken from the following detailed description of preferred embodiments cannot be used in the disclosed combination only, but also in other combinations, as will be apparent to those skilled in the art. With respect to the following description, it shows:
- Fig. 1: a diagrammatic illustration of a wireless communication network;
- Fig. 2: a diagrammatic illustration of a frame providing subchannels in a wireless communication channel; and
- Fig. 3: a flow chart illustrating a preferred embodiment of the inventive method.

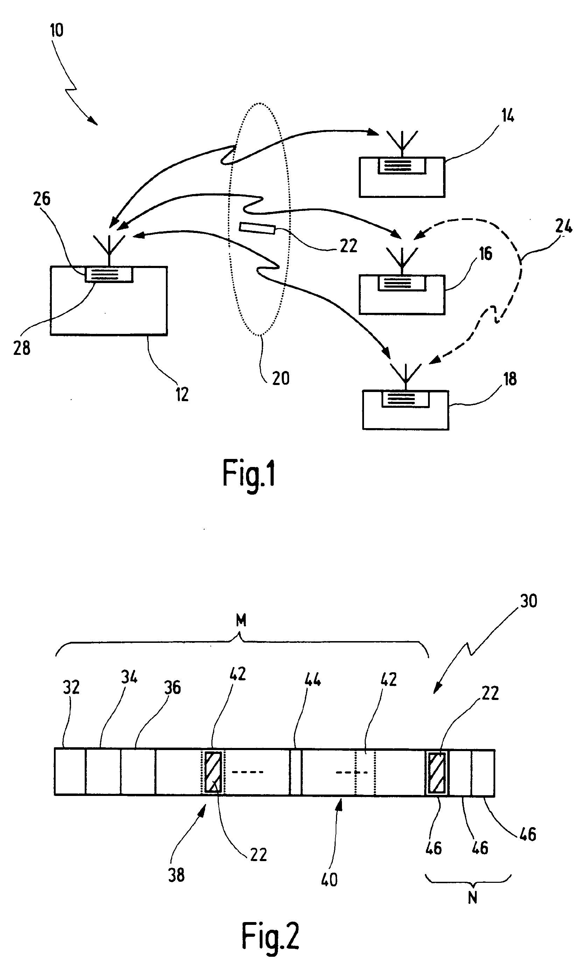

In Fig. 1, reference numeral 10 designates a wireless communication network in its entirety.

Communication network 10 includes a plurality of wireless terminals communicating with each other. For sake of simplicity, it is assumed that wireless network 10 is a HIPERLAN network here by way of non-limiting example. With such a network, one of the wireless terminals is primary to the others with respect to organizing the communication. The primary terminal (master station) is usually called the access point, and it is designated here by reference numeral 12. Reference numerals 14, 16, and 18 designate "simple" wireless terminals (slave stations) which communicate with the access point and among each other. Communication paths are symbolized by arrows shown in Fig. 1.

Reference numeral 20 symbolically designates a communication channel which access point 12 and wireless terminals 14 to 18 communicate across by transmitting and receiving messages 22. A direct terminal to terminal communication is designated by reference numeral 24.

In order to establish communication, access point 12 and wireless terminals 14 to 18 each comprise a protocol unit 26 with protocol steps 28 implemented therein. Usually, the protocol unit 26 is a hardware and/or software module that is programmed with all the rules required to establish and obey the communication rules. Protocol steps 28 symbolize the respective programming. In access point 12, the protocol unit 26 also includes the functionality of a radio channel controller that controls communication on the selected communication channel.

In a HIPERLAN network, access point 12, and in particular said radio channel controller, generates a MAC frame every two milliseconds. The MAC frame is the basic structure to organize access to communication channel 20 from wireless terminals 14 to 18, and from access point 12. Similar frames are also known from other wireless networks. Likewise, other kinds of portions can be used to subdivide a communication channel into subchannels, as mentioned above.

In Fig. 2, a MAC frame with its structure is diagrammatically shown and designated by reference numeral 30. MAC frame 30 is subdivided in time slots providing subchannels for controlled access to communication channel 20. In the present embodiment, subchannel 32 is a broadcast channel which is used by access point 12 to broadcast messages to all of the connected wireless terminals 14 to 18. Subchannel 34 is a frame control channel which is used by access point 12 to inform the other wireless terminals about the frame structure, such as the distribution details of the following subchannels. Subchannel 36 is an access feedback channel which is used by access point 12 to report successful message receipts across random access channels.

Following the aforementioned subchannels 32 to 36, there is a downlink phase 38 and an uplink phase 40. During downlink phase 38, messages 22 are transmitted from access point 12 to selected wireless terminals 14 to 18. For this purpose, downlink phase 38 is subdivided into further subchannels 42. In each of these subchannels, a message 22 can be transmitted. Correspondingly, uplink phase 40 is subdivided in subchannels 42 that can be used by wireless terminals 14 to 18 for transmitting messages to access point 12. Between downlink phase 38 and uplink phase 40, a subchannel 44 is provided for a direct terminal-to-terminal communication, as is indicated by arrow 24 in Fig. 1.

Each of the M subchannels discussed so far will be uniquely assigned to access point 12 or to a selected wireless terminal 14 to 18 for communication. Therefore, message collisions due to multiple access to one or several subchannels are prevented.

By way of example, MAC frame 30 further includes N = 3 subchannels 46 that are not uniquely assigned to a special wireless terminal. Thus, subchannels 46 are random access channels. According to the invention, the number N of random access channels 46 is adjusted depending to the current traffic demand.

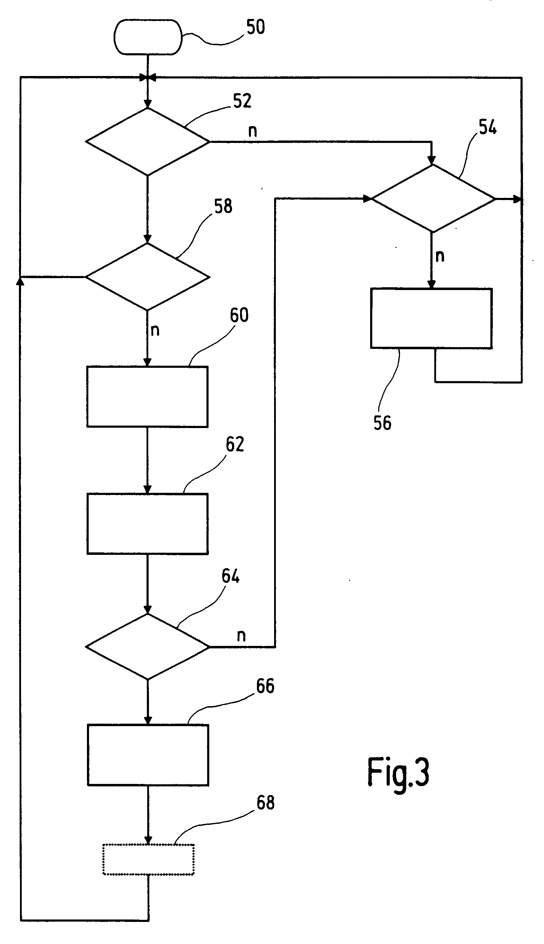

In Fig. 3, reference numeral 50 designates the entry into a procedure of adjusting the number of random access channels 46 used in wireless network 10. Following the entry, it is first decided in step 52 whether or not a message collision had occurred in one or more of the existing random access channels 46. If no collision had occurred, the procedure branches to step 54, where another decision has to be made. The decision of step 54 is whether or not the number of access channels 46 is already a predefined minimum number (N = Nₘᵢₙ ?). If the number N of random access channels 46 is already minimum, the procedure returns to the entry portion, starting again with a new decision about the occurrence of collisions in random access channels 46. On the other hand, if the number N of random access channels is above the pre-defined minimum number, the number N of random access channels is decreased in step 56. After that, the procedure again returns to the entry portion with the decision about the occurrence of collisions.

If it is decided in step 52 that message collisions have occurred in the existing random access channels, a further decision is made in step 58 about whether or not the existing number N of random access channels is already the pre-defined maximum number (N = Nₘₐₓ ?). If the current number N of random access channels is already the pre-defined maximum number, the procedure returns to the entry portion starting with a new decision about the occurrence of message collisions.

On the other hand, if the current number N of random access channels has not reached the pre-defined maximum, the number N of random access channels is increased in step 60. Following that, a third number K representing a number of successful access attempts from wireless terminals to random access channels is estimated in step 62. According to the preferred embodiment, said third number K is estimated by counting the number of messages successfully received by access point 12 from wireless terminals 14 to 18, i.e. by counting the number K representing the number of successful access attempts.

In step 64, it is then decided whether or not third number K has increased after the number N of existing random access channels has been increased in step 60. If no increase of successful access attempts to random access channels 46 can be determined despite the increased number of random access channels, it is assumed that failed communication attempts have been caused by external jammers or interference with external radio sources. In this case, it makes no sense to further increase the number N of random access channels, or even to keep the increased number N of random access channels, since no improvement in communication has been achieved. Accordingly, the procedure branches to step 54, if no increase in the number of successful communication attempts is determined. In this case, number N of random access channels is reduced according to steps 54 and 56.

However, if an increase in the number K of successful access attempts has been detected, current number N of random access channels will be kept according to step 66. After that, the procedure is iteratively repeated.

According to an alternative embodiment, the number N of existing random access channels can be kept for several MAC frames, and the number K of successful communication attempts is determined as an average third number over groups of MAC frames. This alternative is indicated by step 68 (box with dotted lines) symbolizing an idle cycle for one or more MAC frames. During idle cycle 68, the adjustment procedure does not increase or decrease the number N of existing random access channels.

## Claims

1. Method for communicating messages (22) within a wireless network (10), in particular a HIPERLAN network, having a plurality of wireless terminals (12, 14, 16, 18), said method comprising the steps of:
- providing at least one wireless communication channel (20) that is accessible from said wireless terminals (12, 14, 16, 18),
- providing portions, in particular a series of frames (30), that subdivide said at least one communication channel (20) into subchannels (32, 34, 36, 42, 44, 46),
- assigning a first number (M) of said subchannels (32, 34, 36, 42, 44) to selected ones of said wireless terminals (12, 14, 16, 18) for permitting collision free access to said communication channel (20),
- reserving a second number (N) of said subchannels (46) as non-assigned random access channels, and
- communicating said messages (22) between said wireless terminals (12, 14, 16, 18) across said first and second number of subchannels (32, 34, 36, 42, 44, 46)
**characterized by** the steps of
- monitoring (52) if message collisions occur in said random access channels (46), and
- adjusting (56, 60) said second number (N) depending on whether or not message collisions occur.

2. Method according to claim 1, **characterized in that** said step of adjusting includes a first substep of estimating (62) a third number (K) representing a number of successful access attempts to said random access channels (46), and a second substep of setting (56) said second number (N) depending on whether or not said third number (K) increased after a previous setting step.

3. Method according to claim 2, **characterized in that** said second number (N) is decreased (56), if said third number (K) does not follow an increase of said second number (N) in the previous setting step (64).

4. Method according to claim 2 or 3, **characterized in that** said third number (K) is estimated on a frame-by-frame basis.

5. Method according to claim 2 or 3, **characterized in that** said third number (K) is estimated as an average third number over groups of frames.

6. Method according to any of claims 1 to 5, **characterized in that** said second number (N) is increased (60), if message collisions are detected (52).

7. Method according to any of claims 1 to 6, **characterized in that** said second number (N) is decreased (56), if no message collisions are detected (52).

8. Method according to any of claims 1 to 7, **characterized in that** said second number (N) is maintained over a predefined number of consecutive frames (68) after each setting step.

9. Method according to any of claims 1 to 8, **characterized in that** said step of adjusting is iteratively repeated.

10. Method according to any of claims 1 to 9, **characterized in that** a message collision is determined if a corrupted signal is received across a random access channel.

11. Method according to any of claims 1 to 10, **characterized in that** said second number (N) is selected from a range between a predefined minimum number and a predefined maximum number (54, 58).

12. Method according to any of claims 1 to 11, **characterized in that** at least one of said wireless terminals (12, 14, 16, 18) is an access point (12), and said second number is adjusted by said access point (12).

13. Access point for use in a wireless communication network, comprising a protocol unit (26) having protocol steps (28) implemented, said protocol steps (28) providing portions, in particular a series of frames (30), that subdivide a communication channel (20) into subchannels (32, 34, 36, 42, 44, 46), said protocol steps (28) further assigning a first number (M) of said subchannels (32, 34, 36, 42, 44) to selected ones of wireless terminals (14, 16, 18) connected to said access point (12) for permitting collision free access to said communication channel (20), said protocol steps (28) further reserving a second number (N) of said subchannels (46) as non-assigned random access channels, and said protocol steps (28) communicating messages (22) to and from said wireless terminals (12, 14, 16, 18) across said first and second number of subchannels (32, 34, 36, 42, 44, 46), **characterized in that** said protocol unit (26) further includes a radio channel controller for monitoring (52) if message collisions occur in said random access channels (46), and for adjusting (56, 60) said second number (N) depending on whether or not message collisions occur.

14. Communication network comprising a plurality of wireless terminals (12, 14, 16, 18), at least one of said wireless terminals (12) being an access point, said wireless terminals (12, 14, 16, 18) communicating messages (22) among each other, and said access point being an access point (12) according to claim 13.

15. Microprocessor program product comprising program code means stored on a microprocessor readable medium for executing protocol steps of the method as defined in any of claims 1 to 12, when said program product is run on a microprocessor.
